# EUROPEAN PATENT SPECIFICATION

(11) **EP 3 321 586 B1**
(45) Date of publication and mention of the grant of the patent: **30.06.2021**
(21) Application number: 17201185.0
(22) Date of filing: 10.11.2017
(51) Int. Cl.: F23R 3/00, F23R 3/50

(54) **GAS TURBINE ENGINE COMBUSTOR HAVING A COATED COMBUSTOR PANEL SHELL AND METHOD FOR MANUFACTURING THE COMBUSTOR**
GASTURBINENBRENNKAMMER MIT BESCHICHTETEM BRENNKAMMERMANTEL UND VERFAHREN ZU DEREN HERSTELLUNG
CHAMBRE DE COMBUSTION DE MOTEUR À TURBINE À GAZ AVEC UN PANNEAU DE CHAMBRE DE COMBUSTION REVÊTU ET PROCÉDÉ DE SON MANUFACTURE

(30) Priority: 10.11.2016 US 201615348710
(43) Date of publication of application: 16.05.2018
(73) Proprietor: Raytheon Technologies Corporation, Farmington, CT 06032 (US)
(72) Inventor: BURD, Steven W., Cheshire, CT Connecticut 06410-0312 (US)
(74) Representative: Dehns

(56) References cited:
- US-A- 4 338 360
- US-A1- 2005 086 940
- US-A1- 2009 151 360
- US-A1- 2014 174 091

## Description

### BACKGROUND

The present invention relates to a gas turbine engine and, more particularly, to a combustor section therefor.

Gas turbine engines, such as those that power modern commercial and military aircraft, generally include a compressor section to pressurize an airflow, a combustor section to burn a hydrocarbon fuel in the presence of the pressurized air, and a turbine section to extract energy from the resultant combustion gases.

Among the engine components, relatively high temperatures are observed in the combustor section such that cooling airflow is provided to meet desired service life requirements. The combustor section typically includes a combustion chamber formed by an inner and outer wall assembly. Each wall assembly includes a support shell lined with heat shields often referred to as liner panels. Combustor panels are often employed in modern annular gas turbine combustors to form the inner flow path. The panels are part of a two-wall liner and are exposed to a thermally challenging environment.

In typical combustor chamber designs, combustor Impingement Film-Cooled Floatwall (IFF) liner panels typically include a hot side exposed to the gas path. The opposite, or cold side, has features such as cast in threaded studs to mount the liner panel and a full perimeter rail that contact the inner surface of the liner shells.

Distress to the liner shell can result from elevated temperatures when the shell is partially or fully is exposed to the hot combustor gases through direct contact, panel inflow, and/or radiation. Direct or partial hot gas exposure is possible at interfaces of combustor panels, when combustor panels experience operation distress (oxidation/TMF) or through reduced airflow from hole plugging and build-up. Radiation is possible through dilution holes, igniter holes and other interfaces. The elevated temperatures may ultimately result in corrosion and distress to the shell via cracking, leakage and material liberation.

US 2005/086940 A1 discloses a prior art combustor as set forth in the preamble of claim 1.

US 2009/151360 A1 discloses a prior art combustor.

US 2014/174091 A1 discloses a prior art repair procedure for a gas turbine engine via variable polarity welding.

### SUMMARY

From one aspect, the invention provides a combustor for a gas turbine engine as recited in claim 1.

In a further embodiment of the present invention the shell coating may include a metallic bond coat.

In a further embodiment of the present invention the metallic bond coat may include a nickel-based alloy material.

In a further embodiment of the present invention the liner coating may include a bond coat and a top coat.

In a further embodiment of the present invention the top coat may include a ceramic material.

In a further embodiment of the present invention the shell coating and the liner coating may be thermal barrier coatings.

The invention also provides a method for manufacturing a combustor for a gas turbine engine as recited in claim 7.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment of the invention. The drawings that accompany the detailed description can be briefly described as follows:
FIG. 1 is a schematic cross-section of an example gas turbine engine architecture;
FIG. 2 is an expanded longitudinal schematic sectional view of a combustor section according to one non-limiting embodiment that may be used with the example gas turbine engine architectures;
FIG. 3 is an exploded partial sectional view of a portion of a combustor wall assembly;
FIG. 4 is a perspective cold side view of a portion of a liner panel array;
FIG. 5 is a perspective partial sectional view of a combustor;
FIG. 6 is a sectional view of a portion of a combustor wall assembly; and
FIG. 7 is a cold side view of a portion of a liner shell illustrating particular regions that may be particularly subjected to combustion gases according to one disclosed non-limiting embodiment.

### DETAILED DESCRIPTION

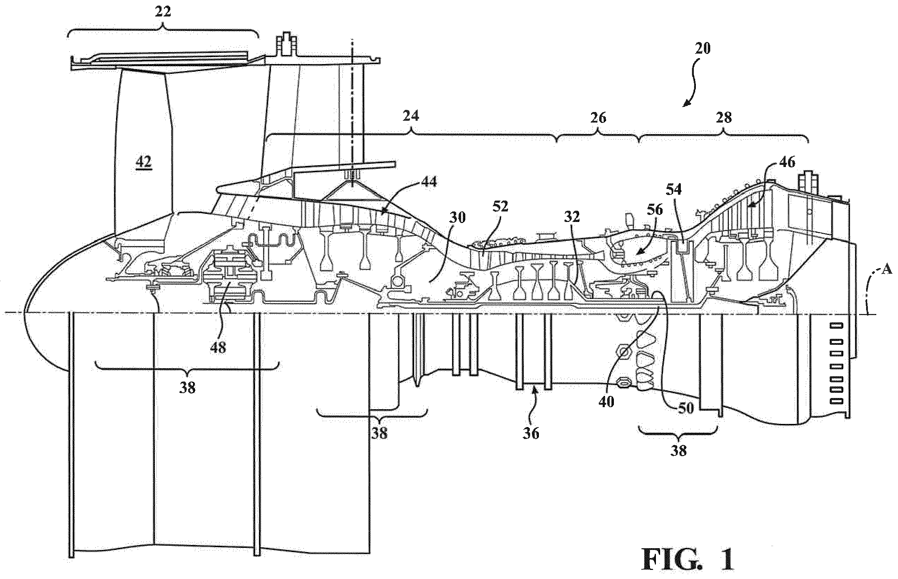

FIG. 1 schematically illustrates a gas turbine engine 20. The gas turbine engine 20 is disclosed herein as a two-spool turbo fan that generally incorporates a fan section 22, a compressor section 24, a combustor section 26 and a turbine section 28. Alternative engine architectures might include an augmentor section among other systems or features. The fan section 22 drives air along a bypass flowpath and into the compressor section 24. The compressor section 24 drives air along a core flowpath for compression and communication into the combustor section 26, which then expands and directs the air through the turbine section 28. Although depicted as a turbofan in the disclosed non-limiting embodiment, it should be appreciated that the concepts described herein are not limited to use with turbofans as the teachings may be applied to other types of turbine engines such as a turbojets, turboshafts, and three-spool (plus fan) turbofans wherein an intermediate spool includes an Intermediate Pressure Compressor ("IPC") between a Low Pressure Compressor ("LPC") and a High Pressure Compressor ("HPC"), and an Intermediate Pressure Turbine ("IPT") between the High Pressure Turbine ("HPT") and the Low Pressure Turbine ("LPT").

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a Low Pressure Compressor ("LPC") 44 and a Low Pressure Turbine ("LPT") 46. The inner shaft 40 drives the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a High Pressure Compressor ("HPC") 52 and High Pressure Turbine ("HPT") 54. A combustor 56 is arranged between the HPC 52 and the HPT 54. The inner shaft 40 and the outer shaft 50 are concentric and rotate about the engine central longitudinal axis A which is collinear with their longitudinal axes.

Core airflow is compressed by the LPC 44, then the HPC 52, mixed with the fuel and burned in the combustor 56, then expanded over the HPT 54 and the LPT 46. The LPT 46 and HPT 54 rotationally drive the respective low spool 30 and high spool 32 in response to the expansion. The main engine shafts 40, 50 are supported at a plurality of points by bearing systems 38 within the static structure 36.

In one non-limiting example, the gas turbine engine 20 is a high-bypass geared aircraft engine. In a further example, the gas turbine engine 20 bypass ratio is greater than about six. The geared architecture 48 can include an epicyclic gear train, such as a planetary gear system or other gear system. The example epicyclic gear train has a gear reduction ratio of greater than about 2.3, and in another example is greater than about 2.5:1. The geared turbofan enables operation of the low spool 30 at higher speeds which can increase the operational efficiency of the LPC 44 and LPT 46 and render increased pressure in a fewer number of stages.

A pressure ratio associated with the LPT 46 is pressure measured prior to the inlet of the LPT 46 as related to the pressure at the outlet of the LPT 46 prior to an exhaust nozzle of the gas turbine engine 20. In one non-limiting embodiment, the bypass ratio of the gas turbine engine 20 is greater than about ten, the fan diameter is significantly larger than that of the LPC 44, and the LPT 46 has a pressure ratio that is greater than about five. It should be appreciated, however, that the above parameters are only exemplary of one embodiment of a geared architecture engine and that the present disclosure is applicable to other gas turbine engines including direct drive turbofans.

In one embodiment, a significant amount of thrust is provided by the bypass flow due to the high bypass ratio. The fan section 22 of the gas turbine engine 20 is designed for a particular flight condition - typically cruise at about 0.8 Mach and about 35,000 feet (10,668m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of ("Tram"°R / 518.7°R)^{0.5} (where °R = K x 9/5). The Low Corrected Fan Tip Speed according to one non-limiting embodiment of the example gas turbine engine 20 is less than about 1150 fps (351 m/s).

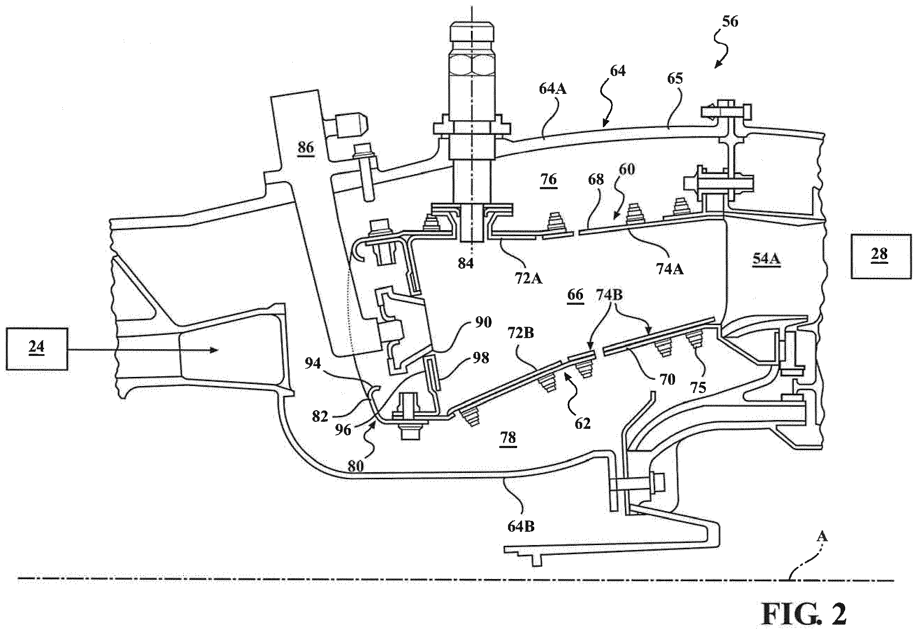

With reference to FIG. 2, the combustor section 26 generally includes a combustor 56 with an outer combustor wall assembly 60, an inner combustor wall assembly 62, and a diffuser case module 64. The outer combustor wall assembly 60 and the inner combustor wall assembly 62 are spaced apart such that a combustion chamber 66 is defined therebetween. The combustion chamber 66 is generally annular in shape to surround the engine central longitudinal axis A.

The outer combustor liner assembly 60 is spaced radially inward from an outer diffuser case 64A of the diffuser case module 64 to define an outer annular plenum 76. The inner combustor liner assembly 62 is spaced radially outward from an inner diffuser case 64B of the diffuser case module 64 to define an inner annular plenum 78. It should be appreciated that although a particular combustor is illustrated, other combustor types with various combustor liner arrangements will also benefit herefrom. It should be further appreciated that the disclosed cooling flow paths are but an illustrated embodiment and should not be limited only thereto.

The combustor wall assemblies 60, 62 contain the combustion products for direction toward the turbine section 28. Each combustor wall assembly 60, 62 generally includes a respective support shell 68, 70 which supports one or more liner panels 72, 74 mounted thereto arranged to form a liner array. The support shells 68, 70 may be manufactured by, for example, the hydroforming of a sheet metal alloy to provide the generally cylindrical outer shell 68 and inner shell 70. Each of the liner panels 72, 74 may be generally rectilinear with a circumferential arc. The liner panels 72, 74 may be manufactured of, for example, a nickel based super alloy, ceramic or other temperature resistant material. In one disclosed non-limiting embodiment, the liner array includes a multiple of forward liner panels 72A and a multiple of aft liner panels 72B that are circumferentially staggered to line the outer shell 68. A multiple of forward liner panels 74A and a multiple of aft liner panels 74B are circumferentially staggered to line the inner shell 70.

The combustor 56 further includes a forward assembly 80 immediately downstream of the compressor section 24 to receive compressed airflow therefrom. The forward assembly 80 generally includes a cowl 82, a bulkhead assembly 84, and a multiple of swirlers 90 (one shown). Each of the swirlers 90 is circumferentially aligned with one of a multiple of fuel nozzles 86 (one shown) and the respective hood ports 94 to project through the bulkhead assembly 84.

The bulkhead assembly 84 includes a bulkhead support shell 96 secured to the combustor walls 60, 62, and a multiple of circumferentially distributed bulkhead liner panels 98 secured to the bulkhead support shell 96 around the swirler opening. The bulkhead support shell 96 is generally annular and the multiple of circumferentially distributed bulkhead liner panels 98 are segmented, typically one to each fuel nozzle 86 and swirler 90.

The cowl 82 extends radially between, and is secured to, the forwardmost ends of the combustor walls 60, 62. The cowl 82 includes a multiple of circumferentially distributed hood ports 94 that receive one of the respective multiple of fuel nozzles 86 and facilitates the direction of compressed air into the forward end of the combustion chamber 66 through a swirler opening 92. Each fuel nozzle 86 may be secured to the diffuser case module 64 and project through one of the hood ports 94 and through the swirler opening 92 within the respective swirler 90.

The forward assembly 80 introduces core combustion air into the forward section of the combustion chamber 66 while the remainder enters the outer annular plenum 76 and the inner annular plenum 78. The multiple of fuel nozzles 86 and adjacent structure generate a blended fuel-air mixture that supports stable combustion in the combustion chamber 66.

Opposite the forward assembly 80, the outer and inner support shells 68, 70 are mounted to a first row of Nozzle Guide Vanes (NGVs) 54A in the HPT 54. The NGVs 54A are static engine components which direct core airflow combustion gases onto the turbine blades of the first turbine rotor in the turbine section 28 to facilitate the conversion of pressure energy into kinetic energy. The core airflow combustion gases are also accelerated by the NGVs 54A because of their convergent shape and are typically given a "spin" or a "swirl" in the direction of turbine rotor rotation. The turbine rotor blades absorb this energy to drive the turbine rotor at high speed.

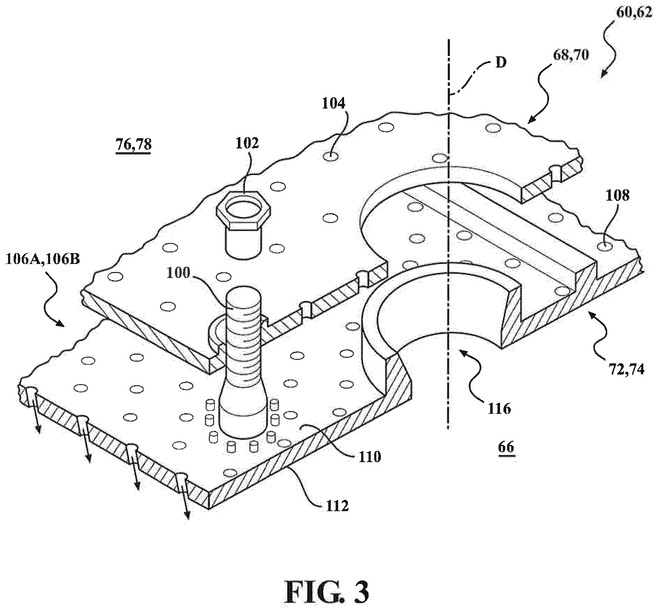

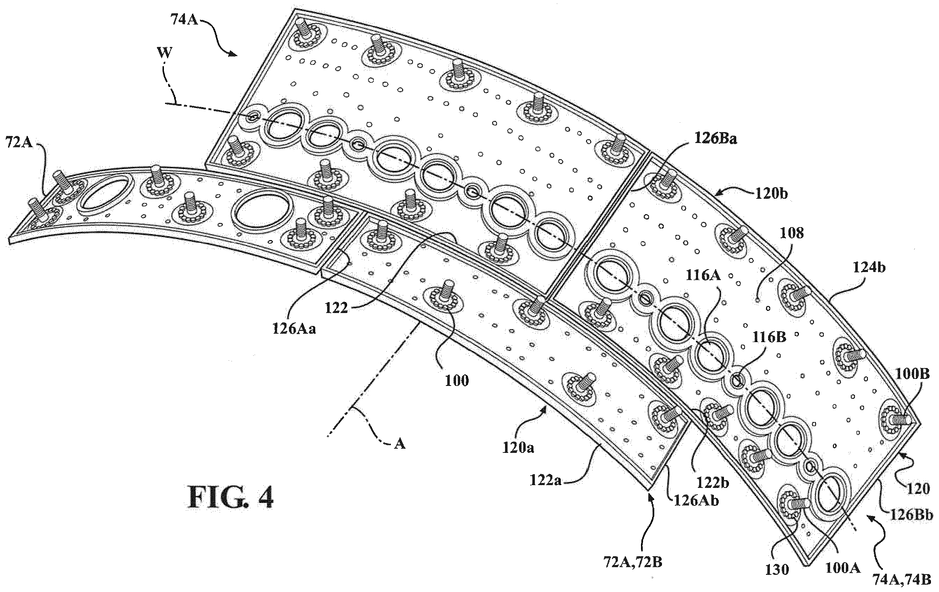

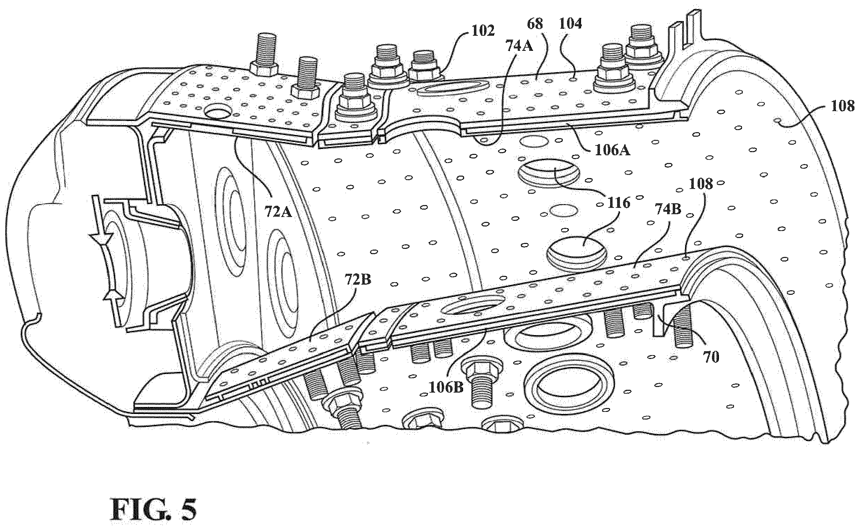

With reference to FIG. 3, a multiple of studs 100 extend from each of the liner panels 72, 74 so as to permit a liner array (partially shown in FIG. 4) of the liner panels 72, 74 to be mounted to their respective support shells 68, 70 with fasteners 102 such as nuts. That is, the studs 100 project rigidly from the liner panels 72, 74 to extend through the respective support shells 68, 70 and receive the fasteners 102 on a threaded section thereof (FIG. 5).

A multiple of cooling impingement passages 104 penetrate through the support shells 68, 70 to allow air from the respective annular plenums 76, 78 to enter cavities 106 formed in the combustor walls 60, 62 between the respective support shells 68, 70 and liner panels 72, 74. The impingement passages 104 are generally normal to the surface of the liner panels 72, 74. The air in the cavities 106 provides cold side impingement cooling of the liner panels 72, 74 that is generally defined herein as heat removal via internal convection.

A multiple of effusion passages 108 penetrate through each of the liner panels 72, 74. The geometry of the passages, e.g., diameter, shape, density, surface arcuate surface, incidence arcuate surface, etc., as well as the location of the passages with respect to the high temperature combustion flow also contributes to effusion cooling. The effusion passages 108 allow the air to pass from the cavities 106 defined in part by a cold side 110 of the liner panels 72, 74 to a hot side 112 of the liner panels 72, 74 and thereby facilitate the formation of a thin, relatively cool, film of cooling air along the hot side 112.

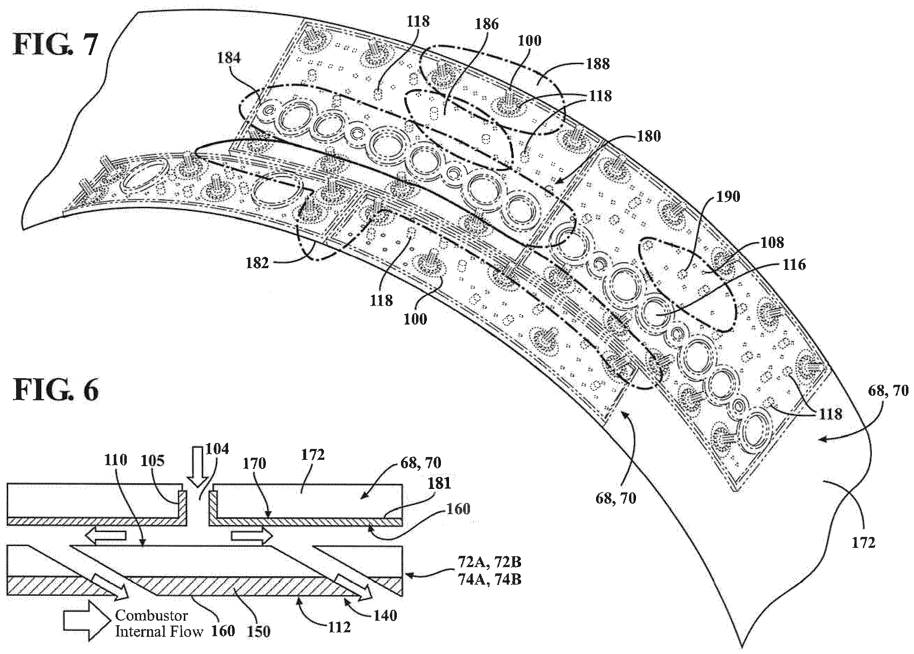

In one example, each of the multiple of effusion passages 108 are typically 0.025" (0.635 mm) in diameter and define a surface arcuate surface section of about thirty (30) degrees with respect to the cold side 110 of the liner panels 72, 74. The effusion passages 108 are generally more numerous than the impingement passages 104 and promote film cooling along the hot side 112 to sheath the liner panels 72, 74 (FIG. 6). Film cooling as defined herein is the introduction of a relatively cooler air at one or more discrete locations along a surface exposed to a high temperature environment to protect that surface in the region of the air injection as well as downstream thereof.

The combination of impingement passages 104 and effusion passages 108 may be referred to as an Impingement Film Floatwall (IFF) assembly. A multiple of dilution passages 116 are located in the liner panels 72, 74 each along a common axis D. For example only, the dilution passages 116 are located in a circumferential line W (shown partially in FIG. 4). Although the dilution passages 116 are illustrated in the disclosed non-limiting embodiment as within the aft liner panels 72B, 74B, the dilution passages may alternatively be located in the forward liner panels 72A, 72B or in a single liner panel which replaces the fore/aft liner panel array. Further, the dilution passages 116 although illustrated in the disclosed non-limiting embodiment as integrally formed in the liner panels, it should be appreciated that the dilution passages 116 may be separate components. Whether integrally formed or separate components, the dilution passages 116 may be referred to as grommets.

With reference to FIG. 4, in one disclosed non-limiting embodiment, each of the forward liner panels 72A, 72B, and the aft liner panels 74A, 74B in the liner panel array includes a perimeter rail 120a, 120b formed by a forward circumferential rail edge 122a, 122b, an aft circumferential rail edge 124a, 124b, and axial rail edges 126Aa 126Ab, 126Ba, 126Bb, that interconnect the forward and aft circumferential rail edge 122a, 122b, 124a, 124b. The perimeter rail 120a, 120b define the edge of the respective the forward liner panels 72A, 72B, and the aft liner panels 74A, 74B to seal each liner panel with respect to the respective support shell 68, 70 to form the impingement cavity 106 therebetween. That is, the forward and aft circumferential rail edge 122a, 122b, 124a, 124b are located at relatively constant curvature shell interfaces while the axial rail edges 126Aa 126Ab, 126Ba, 126Bb, extend across an axial length of the respective support shell 68, 70 to complete the perimeter rail 120a, 120b that seals the forward liner panels 72A, 72B, and the aft liner panels 74A, 74B to the respective support shell 68, 70.

A multiple of studs 100 are located adjacent to the respective forward and aft circumferential rail edge 122a, 122b, 124a, 124b. Each of the studs 100 may be at least partially surrounded by posts 103 to at least partially support the fastener 102 and provide a stand-off between each forward liner panels 72A, 72B, and the aft liner panels 74A, 74B and respective support shell 68, 70.

The dilution passages 116 are located downstream of the forward circumferential rail edge 122a, 122b in the aft liner panels 72B, 74B to quench the hot combustion gases within the combustion chamber 66 by direct supply of cooling air from the respective annular plenums 76, 78. That is, the dilution passages 116 pass air at the pressure outside the combustion chamber 66 directly into the combustion chamber 66.

This dilution air is not primarily used for cooling of the metal surfaces of the combustor shells or panels, but to condition the combustion products within the combustion chamber 66. In this disclosed non-limiting embodiment, the dilution passages 116 include at least one set of circumferentially alternating major dilution passages 116A and minor dilution passages 116B (also shown in FIG. 6). That is, in some circumferentially offset locations, two major dilution passages 116A are separated by one minor dilution passages 116B. Here, every two major dilution passages 116A are separated by one minor dilution passages 116B but may still be considered "circumferentially alternating" as described herein. In one example, each of the major dilution passages 116A is about 0.5" (12.7 mm) in diameter and the total number of major dilution passages 116A communicates about eighty-five percent (85%) of the dilution airflow. The minor dilution passages 116B are each about 0.2" (5.1 mm) in diameter and the total number of minor dilution passages 116B communicates about fifteen percent (15%) of the dilution airflow. It should be appreciated that the dilution passages 116A, 116B need not be circular.

With reference to FIG. 6, the hot side 112 of the forward liner panels 72A, 72B, and the aft liner panels 74A, 74B of the liner panel array may be coated with a coating 140 to provide thermal barrier, environmental barrier, and/or other capabilities required to facilitate survival in a high-temperature environment. The coating 140 may be a thermal barrier coating (TBC) that includes a bond coat 150 and a top coat 160. The bond coat 150, in one non-limiting example, may be a nickel-based alloy material, while the topcoat 160 may be a ceramic material that is applied via plasma or other spray coating system. In some non-limiting embodiments, the top coat 160 may be thicker than the bond coat 150 and have a thickness of about 5-15 mills (0.005- 0.015 inches, 0.13 - 0.38 mm).

In one embodiment, a hot side 160 of the respective support shells 68, 70 (FIG. 5) that face the cold side 110 of the forward liner panels 72A, 72B, and the aft liner panels 74A, 74B, also includes a coating 170 applied to a substrate 172. The substrate 172 is a relatively thin nickel alloy material. The coating 170 is operable to provide a thermal barrier, environmental barrier, and/or other capabilities required to facilitate survival in a high-temperature environment. The shell coating 170 may include just a bond coat 181 and is approximately one-half the thickness (e.g., 2-7 mills (0.002 - 0.007 inches, 0.05 - 0.18 mm)) of the liner panel coating 140. The shell coating 170 may include metallic, metallic-ceramic thermal barrier coatings, or environmental coatings applied via plasma spray, diffusion or other deposition techniques. That is, the shell coating 170 may be different than the liner panel coating 140 in composition and/or thickness.

In one non-limiting embodiment, the shell coating 170 may be applied after the multiple of cooling impingement passages 104 are formed in the shell 68, 70 such that the shell coating 170 at least partially coats the internal surfaces 105 of the multiple of cooling impingement passages 104. That is, the shell coating 170 is applied subsequent to formation of the multiple of cooling impingement passages 104 and will at least partially enter the multiple of cooling impingement passages 104. In this embodiment, the multiple of cooling impingement passages 104 may be manufactured relatively larger to account for the thickness of the shell coating 170.

Alternatively, the shell coating 170 is applied prior to formation of the multiple of cooling impingement passages 104 and the internal surfaces of the multiple of cooling impingement passages 104 are not coated. That is, the shell coating 170 is applied prior to formation of the multiple of cooling impingement passages 104, which are formed therethrough via, for example, laser drilling.

With reference to FIG. 7, the shell coating 170 is applied locally to the substrate 172 of the shell 68, 70 in particular regions 180 that may be particularly subjected to combustion gases yet minimize increased weight. In one example, the regions 180 include a panel interface region 182, a dilution hole region 184, an igniter hole region 186, a turbine vane upstream region 188 upstream each Nozzle Guide Vanes (NGVs) 54A in the HPT 54, localized hot spot regions 190, at a combustor-bulkhead/cowl interface or as a consequence of panel distress including oxidation, cracking and material liberation and/or other regions which may require particular thermal protection.

The shell coating 170 is operable to extend the lives of the dual-wall combustor liner system by preventing distress to the shell that can result in cracking, leakage and material liberation as well as assist with environmental protection from corrosion, etc.

The use of the terms "a" and "an" and "the" and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. A combustor (56) for a gas turbine engine (20) comprising:
a support shell (68,70) with a shell coating (170) applied thereto; and
a multiple of liner panels (72,74) circumferentially mounted within the support shell (68,70) via a multiple of studs (100), each of the multiple of liner panels (72,74) having a liner coating (140) applied thereto;
**characterised in that**:
the shell coating (170) is about one-half the thickness of the liner coating (140); and
the shell coating (170) is locally applied to at least one of a dilution hole region (184), an igniter hole region (186), a turbine vane upstream region (188) upstream of each Nozzle Guide Vane (54A), and a panel interface region (182).

2. The combustor (56) as recited in claim 1, wherein the shell coating (170) includes a metallic bond coat (181).

3. The combustor (56) as recited in claim 2, wherein the metallic bond coat (181) includes a
nickel-based alloy material.

4. The combustor (56) as recited in any preceding claim, wherein the liner coating (140) includes a bond coat (150) and a top coat (160).

5. The combustor (56) as recited in claim 4, wherein the top coat (160) includes a ceramic material.

6. The combustor (56) as recited in any preceding claim, wherein the shell coating (170) and the liner coating (140) are thermal barrier coatings.

7. A method for manufacturing a combustor (56) for a gas turbine engine (20) comprising locally applying a shell coating (170) to a combustor shell (68,70) subsequent to a prior repair only in regions subjected to combustion gases, and applying a liner coating (140) to each of a multiple of liner panels (72, 74), wherein the shell coating (170) is about one-half the thickness of the liner coating (140).

## Patentansprüche

1. Brennkammer (56) für ein Gasturbinentriebwerk (20), umfassend:
einen Stützmantel (68, 70), auf dem eine Mantelbeschichtung (170) aufgebracht ist; und
eine Vielzahl von Einsatzplatten (72, 74), die in Umfangsrichtung innerhalb des Stützmantels (68, 70) mittels einer Vielzahl von Zapfen (100) montiert sind, wobei auf jeder aus der Vielzahl von Einsatzplatten (72, 74) eine Einsatzbeschichtung (140) aufgebracht ist;
**dadurch gekennzeichnet, dass**:
die Mantelbeschichtung (170) etwa halb so dick wie die Einsatzbeschichtung (140) ist; und
die Mantelbeschichtung (170) lokal auf mindestens einen aus einem Verdünnungslochbereich (184), einem Zünderlochbereich (186),einem stromaufwärtigen Turbinenleitschaufelbereich (188) stromaufwärts jeder Düsenleitschaufel (54A) und einem Plattengrenzflächenbereich (182) aufgebracht wird.

2. Brennkammer (56) nach Anspruch 1, wobei die Mantelbeschichtung (170) einen metallischen Haftvermittler (181) beinhaltet.

3. Brennkammer (56) nach Anspruch 2, wobei der metallische Haftvermittler (181) ein nickelbasiertes Legierungsmaterial beinhaltet.

4. Brennkammer (56) nach einem der vorstehenden Ansprüche, wobei die Einsatzbeschichtung (140) einen Haftvermittler (150) und eine Deckschicht (160) beinhaltet.

5. Brennkammer (56) nach Anspruch 4, wobei die Deckschicht (160) ein keramisches Material beinhaltet.

6. Brennkammer (56) nach einem der vorstehenden Ansprüche, wobei die Mantelbeschichtung (170) und die Einsatzbeschichtung (140) Wärmedämmbeschichtungen sind.

7. Verfahren zum Herstellen einer Brennkammer (56) für ein Gasturbinentriebwerk (20), das lokale Aufbringen einer Mantelbeschichtung (170) auf einen Brennkammermantel (68, 70) im Anschluss an eine vorherige Reparatur nur in Bereichen, die Verbrennungsgasen ausgesetzt sind, und das Aufbringen einer Einsatzbeschichtung (140) auf jede aus einer Vielzahl von Einsatzplatten (72, 74) umfassend, wobei die Mantelbeschichtung (170) etwa halb so dick wie die Einsatzbeschichtung (140) ist.

## Revendications

1. Chambre de combustion (56) pour un moteur à turbine à gaz (20) comprenant :
une coque de support (68, 70) avec un revêtement de coque (170) appliqué sur celle-ci ; et
un multiple de panneaux de doublure (72, 74) montés circonférentiellement à l'intérieur de la coque de support (68, 70) par l'intermédiaire d'un multiple de goujons (100), chacun du multiple de panneaux de doublure (72, 74) ayant un revêtement de doublure (140) appliqué à celui-ci ;
**caractérisée en ce que** :
le revêtement de coque (170) est d'environ la moitié de l'épaisseur du revêtement de doublure (140) ; et
le revêtement de coque (170) est appliqué localement à au moins une d'une région de trou de dilution (184), d'une région de trou d'allumeur (186), d'une région amont d'aube de turbine (188) en amont de chaque aube de guidage de buse (54A), et d'une région d'interface de panneau (182).

2. Chambre de combustion (56) selon la revendication 1, dans laquelle le revêtement de coque (170) inclut un revêtement de liaison métallique (181).

3. Chambre de combustion (56) selon la revendication 2, dans laquelle le revêtement de liaison métallique (181) inclut un matériau d'alliage à base de nickel.

4. Chambre de combustion (56) selon une quelconque revendication précédente, dans laquelle le revêtement de doublure (140) inclut un revêtement de liaison (150) et un revêtement supérieur (160).

5. Chambre de combustion (56) selon la revendication 4, dans laquelle le revêtement supérieur (160) inclut un matériau céramique.

6. Chambre de combustion (56) selon une quelconque revendication précédente, dans laquelle le revêtement de coque (170) et le revêtement de doublure (140) sont des revêtements de barrière thermique.

7. Procédé de fabrication d'une chambre de combustion (56) pour un moteur à turbine à gaz (20) comprenant l'application locale d'un revêtement de coque (170) sur une coque de chambre de combustion (68, 70) suite à une réparation préalable uniquement dans les régions soumises aux gaz de combustion, et l'application d'un revêtement de doublure (140) sur chacun d'un multiple de panneaux de doublure (72, 74), dans lequel le revêtement de coque (170) est d'environ la moitié de l'épaisseur du revêtement de doublure (140).
